# EUROPEAN PATENT SPECIFICATION

(11) **EP 3 634 628 B1**
(45) Date of publication and mention of the grant of the patent: **19.01.2022**
(21) Application number: 18734989.9
(22) Date of filing: 11.05.2018
(51) Int. Cl.: B01J 37/14, B01J 37/12, B01J 37/16, B01J 37/18, B01J 35/04, C01B 3/38, B01J 23/888, B01J 23/889

(54) **A METHOD OF ACTIVATING A METAL MONOLITH FOR REFORMING A HYDROCARBON AND A METHOD FOR REFORMING USING THE ACTIVATED MONOLITH**
VERFAHREN ZUR AKTIVIERUNG EINES METALLMONOLITHEN ZUR REFORMIERUNG EINES HYDROKARBONS UND VERFAHREN ZUR REFORMIERUNG UNTER VERWENDUNG DES AKTIVIERTEN MONOLITHEN
PROCEDE D'ACTIVATION D'UN MONOLITHE METALLIQUE POUR REFORMER UN HYDROCARBURE ET PROCEDE DE REFORMATION EN UTILISANT LE MONOLITHE ACTIVÉ

(30) Priority: 17.05.2017 US 201762507431 P; 17.05.2017 US 201762507409 P
(43) Date of publication of application: 15.04.2020
(73) Proprietor: ExxonMobil Research and Engineering Company, Annandale, NJ 08801-0900 (US)
(72) Inventor: IDE, Matthew S., Doylestown, PA 18902 (US); SKOULIDAS, Anastasios I., Pittstown, NJ 08867 (US); CAMISA, Joseph A., Maywood, NJ 07607 (US); ALLEN, Joshua W., Branchburg, NJ 08876 (US); O'NEAL, Everett J., Asbury, NJ 08802 (US); WU, Jianxin J., "deceased" (US)
(74) Representative: ExxonMobil Chemical Europe Inc.
(86) International application number: PCT/US2018/032207
(87) International publication number: WO 2018/213110

(56) References cited:
- AU-A1- 2013 273 714
- CA-A1- 2 991 383
- US-A- 4 083 799
- US-A1- 2006 171 880
- US-A1- 2016 136 634
- US-A1- 2016 354 756

## Description

### FIELD

The present application relates to a method for activating catalytic metal monoliths and processes for using same in a reverse flow reactor.

### BACKGROUND

Hydrogen production is a valuable process in refining applications. Hydrogen is required for hydroprocessing applications, which generally refers to hydrotreating and hydrocracking. Hydrotreating depending on the type of application, is either to hydrogenate unsaturated bonds, reduce components to remove oxygen, or reduce inorganic components such as nitrogen or sulfur. This can be done either for reasons of desirable chemistry (e.g., the hydrogenation of benzene to produce cyclohexane for conversion to K-A oil), improving process performance (e.g., selective di-olefin hydrogenation forward of a selective butylenes to light olefins cracking process), or removing unwanted components (e.g., hydrodesulfurization or hydrodenitrogenation). Hydrocracking refers to an operation that takes a fraction of petroleum called gas oil which is heavy and "cracks" it into smaller molecules that are suitable for incorporation into other petroleum fractions such as gasoline, diesel, and jet fuels. Hydrogen is a key component of all hydroprocessing applications.

Currently, most hydrogen produced in the United States is made by reforming natural gas via steam reforming. Dry reforming, or a combination of the two known as bi-reforming, can also be used. Steam-methane reforming (SMR) is a process in which high temperature steam is used to produce hydrogen from a methane source in the presence of a catalyst. The reaction is as follows:

CH₄ + H₂O → CO + 3 H₂

Dry reforming is similar to SMR, but steam is replaced by carbon dioxide in the reforming reaction:

CH₄ + CO₂ = 2H₂ + 2CO

Steam reforming and dry reforming may also act in concert for a process known as bi-reforming. As shown hydrogen and carbon monoxide are produced as a result of these reforming reactions. This mixture can be referred to as synthesis gas or "syngas." Syngas generated with a H₂/CO molar ratio between 1 and 10 is useful as a feed for the production of methanol, dimethyl ether, lube basestocks, and of course, hydrogen. The synthesis gas or "syngas" is a byproduct a variety of refinery processes. While most references herein are directed to the methane reforming reaction, it should be appreciated by persons of skill in the art that these reforming processes can apply to heavier petroleum fractions such as ethane, ethanol, propane or even gasoline.

Natural gas reforming methods sometimes utilize a reverse flow reactor (RFR) scheme. In a reverse flow system, flow through a reactor with catalyst is periodically reversed in order to store heat and/or mass, to regenerate heat/catalysts in situ, or to avoid kinetic limitation of a system at equilibrium. A basic RFR typically operates as a single reactor having two zones, a first zone (reaction or combustion zone) and a second zone (recuperator zone). In some descriptions, there is a third zone described as a mixer zone which refers to the transition area between the reaction zone and the recuperator zone. Both zones will contain regenerative reactor beds. Regenerative beds, as used herein, are intended to comprise material that are effective in storing and transferring heat. Regenerative reactor bed(s) means a regenerative bed that may also be used for carrying out a chemical reaction. Regenerative beds are generally known in the art and may comprise packing material such as glass or ceramic beads or spheres, metal beads or spheres, ceramic or metal honeycomb materials, ceramic tubes, monoliths, and the like. In the reaction step of the cycle, the reaction zone is at an elevated temperature and the recuperator zone is at a lower temperature. A reactant feed is introduced to a first end of the reaction zone.

This feed stream picks up heat from the bed and is reacted, usually over catalyst, to produce the desired reaction. As this step proceeds, a temperature profile is created based on the heat transfer properties of the system. When the bed is designed with adequate heat transfer capability, this profile has a relatively sharp temperature gradient, which gradient will move across the reaction zone as the step proceeds. Reaction gas exits the reaction zone at an elevated temperature and passes through the recuperator zone. The recuperator zone is initially at a lower temperature than the reaction zone. As the reaction gas passes through the recuperator zone, the gas is cooled. As the reaction gas is cooled in the recuperator zone, a temperature gradient is created in the zone's regenerative bed and moves across the recuperator zone during this step. The reaction gas then exits the recuperator zone. The second step of the cycle, referred to as the regeneration step then begins.

Regeneration entails transferring heat from the recuperator zone to the reaction zone, to thermally regenerate the reaction beds for the subsequent reaction cycle. Regeneration gas enters recuperator zone and flows through the recuperator zone and into the reaction zone. In doing so, temperature gradients move across the beds similarly but in opposite directions to the temperature gradients developed during the reaction cycle. Fuel and oxidant combust at a region proximate to the interface of the recuperator zone and the reaction zone. The heat recovered from the recuperator zone together with the heat of combustion is transferred to the reaction zone, thermally regenerating the regenerative reaction beds disposed therein.

U.S. Patent No. 8,454,911 to Hershkowitz et al. titled "Methane conversion to higher hydrocarbons" (hereinafter "the '911 patent") describes a process converting methane to acetylene using a reverse flow reactor system comprising a first and second reactor oriented in a series relationship. In the '911 patent, first and second in-situ combustion reactants are passed independently through a first, quenching reactor bed. Both reactants are heated by the hot quench bed, before they react with each other in an exothermic reaction zone (or combustion zone). To conserve heat, it is preferred that heat from the combustion zone extends from the first reactor into the second reactor, but is retained within the second reactor so as to conserve energy. After heating the second reactor media, in the reverse cycle, methane is flowed through the second reactor, from the direction opposite the direction of flow during the heating step. The methane contacts the hot second reactor to transfer heat to the methane which cracks to acetylene.

U.S. Patent No. 7,815,873 to Sankaranarayanan et al. titled "Controlled combustion for regenerative reactors with mixer/flow distributor" (hereinafter "the '873 patent") describes a process and apparatus for controlling the location of the exothermic reaction used for regeneration and fuel/oxidant mixing and flow distribution in reverse-flow, cyclic reaction/regeneration processes. The '873 patent proffers an improved mixing technology to better control the distribution of heat throughout the RFR.

U.S. Patent No. 7,217,303 to Hershkowitz et al. titled "Pressure swing reforming for fuel cell systems" (hereinafter "the '303 patent") described the use of an RFR in a pressure swing process.

Catalysts for natural gas reforming can be structured a number of different ways including packed beds comprising catalytic beads or more structured forms including monoliths, metal organic frameworks, hollow fibers, etc. Traditionally monolithic catalyst supports consist of many parallel channels separated by thin walls that are coated with a catalytic active substance. Current monoliths used in a reverse flow reactor are typically made of a ceramic, such as alumina, and are therefore catalytically inert. They can also be made of other refractory materials due to the ability to withstand high temperature and temperature cycling. Ceramic monoliths must be washcoated with a catalytic metal in order to perform natural gas reforming or any other chemistry requiring a catalyst. Additionally, ceramic monoliths have a low volumetric heat capacity and heat conductivity which results in either increased reactor size, reduced throughput, or both, to process an equal amount of natural gas. Metal monoliths are typically made of corrugated foil and rolled, and still require washcoating.

It would be valuable to develop a metal monolithic catalyst support with a higher volumetric heat capacity than achievable with traditional ceramic monoliths. These metal monolith catalyst supports could have a higher volumetric heat capacity than their ceramic counterparts, which would result in reduced reactor size or increased product throughput. Moreover, metal monolith catalyst supports offer greater axial heat conduction versus ceramics and thus can be used to shape the internal temperature profile of the RFR. Additionally, in certain embodiments utilizing additive manufacturing techniques, it has been discovered that otherwise inert metal or metal alloy monoliths can be catalytically activated using an oxido-reductive promotion process. This provides a distinct advantage over the prior art by eliminating the need to washcoat the monolith. Moreover, when additive manufacturing techniques are utilized, monoliths that do not need to be washcoated open up unique design geometries. Channels through the monolith may be not only round, square, and/or hexagonal, but also in other shapes including but not limited to quadralobes, trilobes, and/or fractals to maximize surface area and volumetric heat capacity. It may also be advantageous for the channels to have paths other than the straight through the monolith. Circuitous paths and chambers within the 3D printed monolith may also enhance the desired characteristics. US patent 4,083,799 describes the use of an activated nickel-containing metal screen as a catalyst for hydrocarbon steam reforming. US patent application publication 2016/0136634 describes a method for producing a catalyst from a powdered catalyst material, using an additive layer method. US patent application publication 2006/0171880 describes a catalyst structure for steam reformation, in which a nickel-based steam reforming catalyst is coated on a metal monolith.

### SUMMARY

Methods of preparing metal monoliths, and use of said monoliths in a reforming reaction are described herein. The metal monolith, comprises a monolithic support constructed via additive manufacturing comprising a metal alloy comprising nickel, wherein the monolithic support comprises a plurality of cells with channels extending therefrom; and wherein the monolithic support has a melting point greater than 1200°C. In other aspects, the monolith as a volumetric heat capacity (J/cc/K) greater than 3.5 J/cc/K, e.g. from 3.5to 6 J/cc/K, from 3.5 to 5 J/cc/K. The plurality of cells can form channels of varying shape, including squares, circles, ovals, hexagons, trilobes, quadrolobes, fractals, or a combination thereof. The channels through the monolith can be linear or non-linear, and can also be interrupted by void spaces to form chambers within the monolith.

In certain aspects, the metal monolith may further comprise a catalyst coating, such as a zeolite or metal nanoparticles or microparticles. In certain aspects, the metal alloy is a super alloy, such as Inconel 718. In another aspect, the monolithic support has a volumetric heat capacity greater than 3.5 J/cc/K.

Provided is a method of activating the metal monolith described herein comprising, exposing the metal monolith to a cyclic oxidative and reducing environment for a sufficient number of cycles to activate the metal monolith. In one aspect, the oxidative environment comprises at least one of oxygen, carbon dioxide, carbon monoxide, water, combustion byproducts, peroxide, ozone, permanganate, organic acids, halides, or combinations thereof. In another aspect, wherein the reducing environment comprises at least one of methane, ethane, propane, butane, higher C number paraffins, ethylene, propylene, butylene, higher C number olefins, acetylene, methylacetylene-propadiene (MAPD), hydrogen, carbon monoxide, hydrides, hydrogen sulfide, or combinations thereof. The number is cycles can vary, e.g. from 5-300 cycles or from 20-250 cycles. In certain aspects the reducing environment comprises steam and/or carbon dioxide and hydrocarbons, such as methane, ethane, propane, butane, gasoline, and even whole crude.

Also provided is a method for reforming a feed comprising, providing the metal monolith described above; activating the metal monolith by exposing the metal monolith to a cyclic oxidative and reducing environment for a sufficient number of cycles to activate the metal monolith; introducing a reforming feed to the metal monolith in the presence of heat; wherein the reforming feed comprises hydrocarbons and steam, carbon dioxide, or a combination thereof; thereby producing CO and H₂; and introducing a combustion feed to the metal monolith comprising O₂ or a combination of O₂ and N₂. In certain aspects, the reforming feed is methane and greater than 70% of the methane is converted to CO and H₂.

### BRIEF DESCRIPTION OF THE DRAWINGS

Figure 1 depicts a reverse flow reactor.
Figure 2 is a photograph of two exemplary metal alloy monoliths made via additive manufacturing according to the present disclosure.
Figures 3A and 3B provide close up images of the metal allow monoliths depicted in Figure 2.
Figure 4 is a cross-sectional view of the axial plane of a metal alloy monolith made via additive manufacturing according to the present disclosure.
Figure 5 is a graphical depiction comparing the catalytic activity between a 3D printed Inconel 718 metal monolith and an Inconel 718 metal coupon.

### DETAILED DESCRIPTION

### Definitions

As used herein, the term "activate," "activates," "activating," refers to a transformation from a non-catalytic material to a catalytic material. A catalytic material is one that increases the rate of a chemical reaction. Metal catalysts, such as mixed metal oxide or precious metal oxide catalysts, can be used in a number of different chemistries. For example, such catalysts can be used in natural gas reforming, water gas shift, oxidative paraffin coupling, paraffin dehydrogenation to olefins, methane/ethane dehydrogenation to aromatics, ammonia oxidation to nitrogen oxide, ammonia synthesis, hydrogen cyanide production, methanol oxidation to formaldehyde, catalytic combustion, and fuel cells. Activation, as used herein, is evidenced in differently based on different chemistries, but in all cases, results in a substantial increase in reaction products when the reactants are reacted in the presence of an activated material, than when the reactants are reacted in the presence of a non-activated, but similarly structured material. Specifically, activation may be evidenced by an increase in reaction products of at least 300%, 400%, 500%, 600%, or even 1000% or 1500%. In reforming reactions, for example, activation may be indicated by a step-wise increase in hydrocarbon, such as methane, conversion to CO and H₂-e.g. from 5-15% conversion to 60-90% conversion. A person of skill in the art should readily be able to discern when a non-catalytic material has become catalytic based on comparative data before and after activation as that process is described herein.

As stated above, most hydrogen and/or syngas produced in the United States is made by reforming natural gas via steam reforming, dry reforming, or a combination of the two known as bi-reforming. Steam-methane reforming (SMR) is a process in which high temperature steam is used to produce hydrogen from a methane source in the presence of a catalyst. The reaction is as follows:

CH₄ + H₂O → CO + 3 H₂

Dry reforming is similar to SMR, but steam is replaced by carbon dioxide in the reforming reaction:

CH₄ + CO₂ = 2H₂ + 2CO

Steam reforming and dry reforming may also act in concert for a process known as bi-reforming. Syngas generated with a H₂/CO molar ratio between 1 and 10 is useful as a feed for the production of methanol, dimethyl ether, lube basestocks, and of course, hydrogen. Hydrogen can then be used in various hydroprocessing applications. While most references herein are directed to the methane reforming reaction, it should be appreciated by persons of skill in the art that these reforming processes can apply to heavier petroleum fractions such as ethane, ethanol, propane or even gasoline.

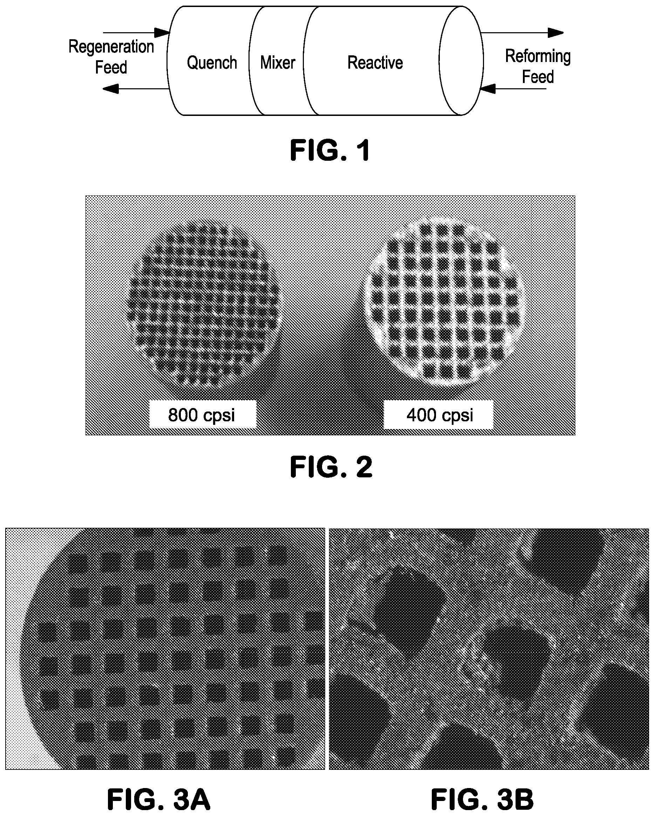

Reverse flow reactors (RFRs) are sometimes used to perform natural gas reforming. A generic RFR is depicted in Figure 1. The RFR operates under forced unsteady-state conditions, created by periodically reversing the feed flow direction. Therefore, the heat released during the exothermic reaction is trapped inside the reactor bed between two consecutive flow reversals, being used to preheat the cold feed up to the reaction temperature. As a result, the RFR is an integrated device where both reaction and heat exchange take place with high thermal efficiency. With specific reference to methane reforming, let us assume in Figure 1 that the reactive region is hot and the quench region is cold. As used herein, "hot" and "cold" are merely terms of relativity and do not refer to specific ranges of temperature, but rather to different stages in the RFR reforming cycle.

In the reaction step, a reforming feed is introduced to a first end of the reactive region. The reforming feed includes hydrocarbons, such as methane, and steam, CO₂, or a combination of steam and CO₂. If steam, then the process is referred to as steam reforming. If CO₂, then the process is referred to as dry-reforming. If a combination, then the process is referred to as bi-reforming. The reforming feed picks up heat from the reactive region and is reacted over catalyst, to produce hydrogen and carbon monoxide, collectively referred to as syngas, per the chemical reactions described above. The reforming reaction itself is endothermic and consumes the heat added to the regeneration step described below. As this step proceeds, a temperature profile is created based on the heat transfer properties of the system. When the bed is designed with adequate heat transfer capability, such as this case with metal or metal alloy, this profile has a relatively sharp temperature gradient, which gradient will move across the reactive region to the mixer and quench region. Reaction gas exits the reaction zone at an elevated temperature and passes through the quench region. The quench region is initially cold. As the reaction gas passes through the quench region, the gas is cooled. As the reaction gas is cooled in the quench region, a temperature gradient is created in the quench region's bed and moves across the quench region. The reaction gas then exits the quench zone. The second step of the cycle, referred to as the regeneration step then begins.

Regeneration entails transferring heat from the quench region to the reactive region, to thermally regenerate the reaction beds for the subsequent reaction cycle. A regeneration feed or combustion feed, usually O₂, N₂, or a combination thereof for methane reforming, enters quench region and flows through the quench region and into the reactive region. In doing so, temperature gradients move across the beds similarly but in opposite directions to the temperature gradients developed during the reaction cycle. Fuel and oxidant combust at a region proximate to the interface of the quench region and the reactive region, i.e. the mixer region. The heat recovered from the quench region together with the heat of combustion is transferred to the reactive region, thermally regenerating the monolith supported catalyst in the reactive region. The cycle then repeats.

As mentioned previously, most catalytic monoliths used in reforming comprise ceramic monolithic substrates washcoated with a catalytic metal. Metal substrates, typically formed from corrugated, rolled metal, can also be used, but still require washcoating with a catalytic metal. Such materials have comparatively lower volumetric heat capacities than other materials, such as nickel, iron, or cobalt based metal alloys. It would be beneficial to use nickel, iron, or cobalt based metal alloys as monolithic catalyst supports because of (1) higher volumetric heat capacities, which could increase product throughput or reduce reactor size and (2) larger axial heat conduction vs. ceramics that can be used to "shape" the internal temperature profile of the RFR to maximize productivity. Referred to in the industry as "super alloys," said metals have excellent mechanical strength, the ability to withstand extremely high temperatures, good surface stability, and resistance to corrosion or oxidation. It is these same qualities that result in difficulties in machining these metals. *See, e.g.,* Machinability of nickel-base super alloys: a general review, 77 J. OF MAT'L PROCESSING TECH. 278 (May 1, 1998). A non-exclusive list of super alloys embodied by the current disclosure include: Hastelloy (e.g. C-22, G-30, S, X), Inconel (e.g. 587, 597, 600, 601, 617, 625, 706, 718, X750), Waspaloy, Rene alloys, Haynes alloys, Incoloy (e.g. 800, 801, 802, 807, 825, 903, 907, 909), MP98T, TMS alloys, and CMSX single crystal alloys. In terms of volumetric heat capacities, Table 1 provides a comparison of typical ceramic materials versus three super alloys. It is clear that the super alloys are superior in this respect.

**Table 1**

| **Material** | **Volumetric Heat Capacity (specific heat capacity × density (J/cc/K))** |
|---|---|
| Alumina (ceramic) | 3.0 |
| Mullite (ceramic) | 2.3 |
| SiC (ceramic) | 2.2 |
| Inconel 718 | 3.6 |
| Hastelloy X | 4.0 |
| Nickel 200 | 4.5 |

Advances in additive manufacturing have made such materials easier to work with. As used herein, additive manufacturing refers to any technology that builds 3D objects by adding layer-upon-layer of material, whether the material is plastic, metal, ceramic, etc. Additive manufacturing includes such technologies as 3D printing, direct metal laser sintering (DMLS), selective laser sintering (SLS), etc. As used herein, the terms 3D printing and additive manufacturing are used interchangeably and do not necessarily refer to a specific unique process unless otherwise stated.

Described herein is a metal monolith produced by additive manufacturing for use in an RFR. The metal monolith is composed of a metal alloy comprising nickel, such as a super alloy, and has a melting point above 1200°C, i.e. above 1250°C, above 1300°C, above 1350°C, or above 1400°C. The monolith described herein can be washcoated with catalyst by any conventional means. Such washcoating techniques are well described in the art. *See, e.g.,* Monolithic reactors for environmental applications: A review on preparation technologies, 109 CHEM. ENG'G J. 11 (May 2005). Example catalysts include zeolites and metal nanoparticles or microparticles. In addition to increased volumetric heat capacity achievable using these materials, additive manufacturing permits cell density and open frontal area (OFA) that can be varied from that typically achievable with ceramic monolith extrusion. OFA's between 10-70% are achievable, preferably 25-50% for highly endothermic chemistries, which is beneficial because increased mass results in even higher volumetric heat capacity.

The metal monolith does not require washcoating, but rather is catalytically activated through a process of oxido-reductive promotion. It has been discovered that exposing 3D printed metal or metal alloy monoliths to cyclic oxidative and reducing environments such as a reforming feed and subsequent combustion feed at high temperatures can result in activation of an otherwise non-catalytic monolith. Examples of oxidizing environments include oxygen, carbon dioxide, carbon monoxide, water, combustion byproducts, peroxide, ozone, permanganate, organic acids, halides, or combinations thereof. Examples of reducing environments include methane, ethane, propane, butane, higher C number paraffins, ethylene, propylene, butylene, higher C number olefins, acetylene, methylacetylene-propadiene (MAPD), hydrogen, carbon monoxide, hydrides, hydrogen sulfide, or combinations thereof. The preceding lists are not exhaustive and a person of ordinary skill in the art would understand that the inert metal alloy starting material can be subjected to myriad oxidizing/reducing environment combinations. The crux of the present disclosure is the cyclic nature of the exposure and the oxido-reductive promotion of the inert metal alloy to an active catalyst as a result. It is believed that any metal alloy with a minimum percentage of a transition metal, such as nickel, platinum, palladium, rhodium, cobalt, silver, molybdenum, chromium, copper, and/or titanium can be transformed into a catalytic metal monolith using the preparation methods described herein. In certain embodiments, without being bound by theory, it is believed that nanoparticles or microparticles within the metal alloy are activated and provide the catalytic properties for the metal monoliths described herein. It is important to note that none of the metal alloys described in the examples below would be considered catalytic to a person of skill in the art before being exposed to the methods of preparation described herein. A minimum percentage of a transition metal means at least 10% by mole, such as 20-80%, such as 30-70%, such as 40-60%, such 45-55%.

As used herein, high temperatures include temperatures from 500-1600°C, for example 600-1300°C, for example 700-1200°C. In a preferred embodiment, the cyclic exposure to oxidative and reducing environments occurs between 800-1400°C.

In certain embodiments, a reforming feed and subsequent combustion feed can provide the cyclic oxidative and reducing environment required to activate the metal monoliths described herein. The reforming feed can include hydrocarbons plus steam, CO₂, or a combination of steam and CO₂. The combustion feed can include fuels plus air or a combination of O₂ and N₂. The process of cyclic exposure activates the 3D printed metal structure for other chemistries requiring a metal catalyst. Without being bound by theory, the cyclic exposure of the metal alloy may form catalytic nanoparticles or microparticles that are supported on an oxide layer on the surface of the metal component. Many combinations of metal oxide layer and catalytic nanoparticles microparticles exist, but one example is for IN-718 alloy the nickel nanoparticles or microparticles can be supported on a primarily chromium oxide layer that also has titania, molybdenum, alumina, silica, etc.

The process of activating the metal structure can best be described with reference to the examples.

### Example 1: Constructing the metal monolith

3D printed 1" long × 0.5" diameter metal monoliths composed of Inconel 718 were constructed. Nominally, Inconel 718 alloy comprises nickel (50-55%), chromium (17-21%), tantalum (0.05% max), manganese (0.35% max), carbon (0.08% max), silicon (0.35% max), molybdenum (2.8-3.3%), niobium (4.75-5.5%), titanium (0.65-1.15%), cobalt (1% max), copper (0.3% max), phosphorus (0.015% max), sulfur (0.015% max), boron (0.006% max), and iron (balance). Both 400 cpsi and 800 cpsi (cells per square inch) were constructed via 3D printing as shown in Figure 1. The 3D printing was completed by DMLS of Inconel 718 powder. Figures 2A and 2B show that due to the process of metal powder sintering a significant amount of surface area or roughness of the monolith walls is produced. The exterior roughness and increased surface area is likely beneficial to the catalytic activity of the 3D printed monolith as compared to a smoother-channeled monolith. Additionally, as seen particularly in Figure 2B and Figure 3, each channel is not identical as some variability is observed in the channel length as well as the sharpness of the corners for the square channels. Thus, the monolith does not have to be uniformly 3D printed to ensure that it will be catalytic, but a uniformly printed structure could exhibit the same or similar properties.

### Examples 2-17: Laboratory evaluation of 3D printed monoliths

The performance of the 3D printed metal monoliths constructed in Example 1 were evaluated for methane reforming (steam, dry, and bi-reforming) in a laboratory scale fixed bed, down-flow reactor. The 1" × 0.5" monolith was wrapped in a high temperature alumina cloth to prevent bypassing and loaded into a quartz reactor with an inlet diameter of approximately 0.6". A thermocouple was located directly above the top of and directly below the bottom of the metal monolith. The methane and carbon dioxide conversion was determined by the disappearance of the reactant. The syngas ratio was calculated as the molar ratio of H₂ and CO in the products. All conversion for continuous flow experiments are reported after 1 hour of lineout. Lineout refers to the time on stream required to obtain a constant conversion of reactants to products. In the following experiments, lineout is where constant methane conversion is observed. All cycling conversions are reported after cycling to lineout at that temperature except where specifically noted in the table, i.e. Y-5^{th} is after 5 consecutive cycles of oxidation and reforming, Y-250^{th} is after 250 consecutive cycles of oxidation and reforming. The nitrogen included in each run is used as an internal standard for gas chromatograph analysis.

Example 2 shows initial experiments on Monolith A (800 cpsi and synthesized from Inconel 718 metal powder as described in Example 1). The reforming of methane with water (steam reforming) was performed on the monolith at a gas hourly space velocity (GHSV) of 10,000 h⁻¹ based on total monolith volume. The reforming feed had a gas composition of 20 vol % CH₄, 70 vol % H₂O, and 10 vol % N₂. At a temperature of 1000°C, the monolith exhibited minimal catalytic activity converting 15% of methane to products with a syngas ratio (H₂/CO) of approximately 3.51. Some initial deactivation of the monolith was observed during the first 60 minutes of time on stream, but the conversion was constant at 15% for 180 minutes after the initial deactivation.

Examples 3-17 show the experiments on Monolith B (400 cpsi and synthesized from Inconel 718 metal powder as described in Example 1). Example 3 shows the simultaneous reforming of methane and carbon dioxide (bi-reforming) on Monolith B at a GHSV of 20,000 h⁻¹ based on total monolith volume and a gas composition of 42.9% CH₄, 31.4% H₂O, 15.7% CO₂, and 10% N₂. At a temperature of 800°C and space velocity of 20,000 h-1, the monolith had no appreciable conversion after 60 min of TOS. While a small amount of hydrogen was observed at the start of reaction, there was no quantifiable production of CO. Any catalytic sites that were exposed at 800°C to the bi-reforming feed likely coked immediately and became inactive for the methane reforming reaction.

Examples 4-15 show dry reforming (carbon dioxide) of methane with GHSVs of 10,000 h⁻¹ or 20,000 h⁻¹. Example 4 shows an experiment for cyclical dry reforming of methane with carbon dioxide a GHSV of 20,000 h⁻¹ and a gas composition of 43.1% CH₄, 46.9% CO₂, and 10% N₂. The cycling dry reforming experiments included an additional step wherein the reforming feed is introduced for 1 minute followed by a 7 second nitrogen purge and then a combustion feed of 5% O₂/N₂ feed is introduced for 1 minute followed by a 7 second nitrogen purge. This cycle was repeated for about 25 cycles to line out the conversion except when noted in Table 2 below.

Results for cycling dry reforming at 800, 900, and 1000°C (oven set temperatures) are shown below in Table 1 and the conversion increases slightly with increasing temperature (Examples 4 - 6). At 1000°C the GHSV was halved to 10,000 h⁻¹ and an approximate double in the methane conversion to 20% was achieved (Example 7). However, after 250 cycles (Example 8) at 1000°C the methane conversion had increased to 88%. Thus, the catalytic monolith was activated by the cycling procedure to achieve a significantly higher conversion than before the activation procedure.

A temperature scan from 800 to 1100°C was then undertaken with a maximum conversion of 94% being achieved at 950 °C (Examples 9 - 15). After the temperature scan, 1000 cycles of dry reforming were completed at 1000 °C and the methane conversion of 87% was nearly identical to the conversion after the 250^{th} cycle at 88%. Upon revisiting the bi-reforming non-cycling run condition (Example 16) at 800 °C and a space velocity of 20,000 h⁻¹, the methane conversion is now 78% compared to the prior methane conversion of 0% before cyclic activation. When temperature is increased to 1000°C (Example 17), the methane conversion is increased to 98%.

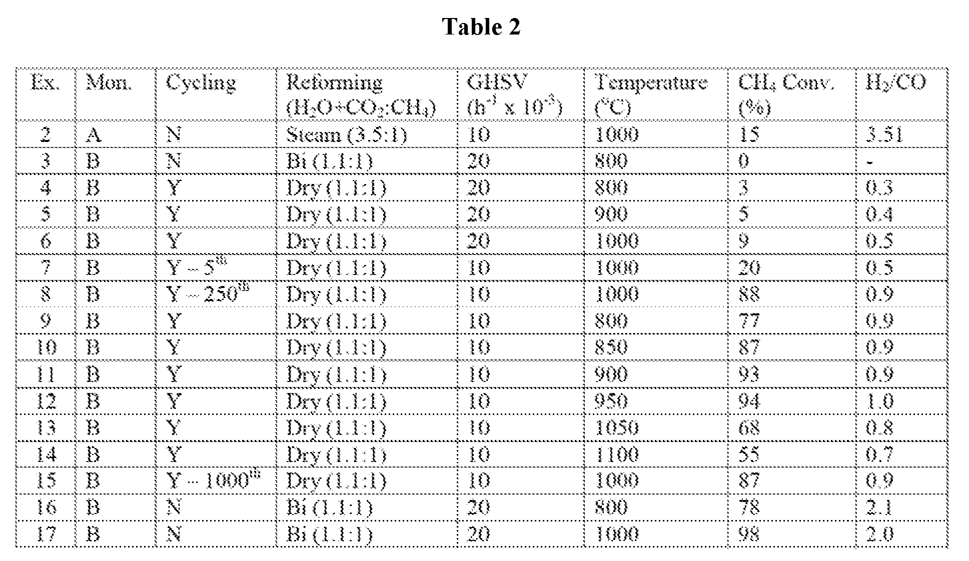

### Examples 18-27: Laboratory evaluation of 3D printed monoliths with oxidative treatment

The performance of a separate but equivalent 800 cpsi 3D printed metal monolith (Monolith C) was evaluated for methane reforming before and after being exposed to a 5% O₂/N₂ gas composition for 24 hours at 1000°C. The results are shown in Table 3 below. While the monolith had no activity (Example 18) before being exposed to the oxidative treatment, it did have some activity after the exposure and achieved a 27% methane conversion (Example 19). Upon cycling with dry reforming, the monolith achieved a 33% methane conversion after 5 cycles (Example 20) compared to the 20% conversion achieved over Monolith B (Example 7). It is believed this activity increase is accelerated by the oxidative treatment which tends to form a chromium oxide layer on the surface of the monolith.

A similar behavior was observed with Monolith C as with Monolith B while cycling with a conversion efficiency of 85% after 250 cycles (Example 21). Additionally, after cyclic activation of the catalyst, the bi-reforming methane conversion of Monolith C was 74% compared to the prior methane conversion of 27% after the oxidative treatment (Example 19).

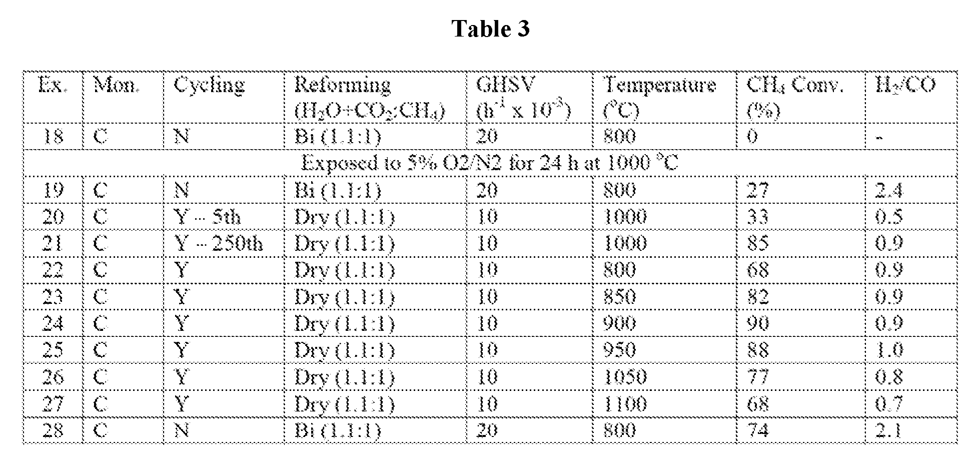

### Examples 29-33: Laboratory evaluation of Monel K 3D printed monoliths

3D printed 1" long × 0.5" diameter metal monoliths composed of Monel K were constructed (Monolith D). Nominally, Monel K alloy comprises nickel (63-70%), aluminum (2.3-3.15%), manganese (1.5% max), carbon (0.25% max), titanium (0.35-0.85%), iron (2.0 % max), and copper (balance). The 3D printing was completed by DMLS of Monel K powder.

Examples 29-33 show bi-reforming and dry reforming of methane with GHSVs of 10,000 h⁻¹ or 20,000 h⁻¹. Example 29 shows an experiment for cyclical bi-reforming of methane with carbon dioxide a GHSV of 20,000 h⁻¹ and a gas composition of 43.1% CH₄, 46.9% CO₂, and 10% N₂. As shown in Table 4 below the Monel K monolith exhibited no activity on the first cycle (Example 29). Results for cycling dry reforming at 1000°C and GHSV of 10,000 h⁻¹ shows a substantial increase in activity, from 17% to 82%, between the first cycle (Example 30) and the 100^{th} cycle (Example 31). The highest activity observed was 91% (Example 32) at some point between 100 and 1500 cycles. Upon revisiting the bi-reforming non-cycling run condition (Example 33) at 1000°C and a space velocity of 20,000 h⁻¹, the methane conversion is now 73% compared to the prior methane conversion of 0% before cyclic activation. The cycling dry reforming experiments included an additional step wherein the reforming feed is introduced for 1 minute followed by a 7 second nitrogen purge and then a combustion feed of 5% O₂/N₂ feed is introduced for 1 minute followed by a 7 second nitrogen purge. This cycle was repeated for about 25 cycles to line out the conversion except when noted in Table 4 below.

**Table 4**

| Ex. | Mon. | Cycling | Reforming (H₂O+CO₂-CH₄) | GHSV (h⁻¹ × 10⁻³) | Temperature (°C) | CH₄ Conv. (%) | H₂/CO |
|---|---|---|---|---|---|---|---|
| 29 | D | N | Bi(1.1:1) | 20 | 800 | 0 | - |
| 30 | D | Y | Dry (1.1:1) | 10 | 1000 | 17 | |
| 31 | D | Y-100^{th} | Dry (1.1:1) | 10 | 1000 | 82 | 0.9 |
| 32 | D | Y - 1500^{th} | Dry (1.1:1) | 10 | 1000 | 91 | 0.9 |
| 33 | D | N | Bi(1.1:1) | 20 | 1000 | 73 | 2.2 |

### Examples 34-38: Laboratory evaluation of Hastelloy X 3D printed monoliths

3D printed 1" long × 0.5" diameter metal monoliths composed of Hastelloy X were constructed (Monolith E). Nominally, Hastelloy X alloy comprises nickel (balance), chromium (20.5-23%), tungsten (0.2-1% max), manganese (1% max), silicon (1% max), molybdenum (8-10%), cobalt (0.5-2.5%), and iron (17-20%). The 3D printing was completed by DMLS of Hastelloy X powder.

Examples 34-38 show dry reforming of methane with GHSVs of 10,000 h⁻¹. It must be appreciated at the outset that the beginning cycling data is missing due to a data recording malfunction. The data below, therefore, indicates activity of the Hastelloy X Monolith E after activation from cycling has already occurred. In other words, the examples below show the effect of temperature on conversion efficiency. Table 5 illustrates that increased temperature will increase activity of 3D printed components. Example 34 shows an experiment for cyclical dry-reforming of methane with carbon dioxide, a GHSV of 20,000 h⁻¹, and a gas composition of 43.1% CH₄, 46.9% CO₂, and 10% N₂. As shown in Table 4 below, Monolith E exhibited 53% conversion during the Example 34 cycle. As temperature is increased, so is the activity. The highest activity observed was 96% (Example 38). The cycling dry reforming experiments included an additional step wherein the reforming feed is introduced for 1 minute followed by a 7 second nitrogen purge and then a combustion feed of 5% O₂/N₂ feed is introduced for 1 minute followed by a 7 second nitrogen purge. This cycle was repeated for about 25 cycles to line out the conversion except when noted in Table 5 below.

**Table 5**

| Ex. | Mon. | Cycling | Reforming (H₂O+CO₂:CH₄ | GHSV (h⁻¹ × 10⁻³) | Temp. (°C) | CH₄ Conv. (%) | H₂/CO |
|---|---|---|---|---|---|---|---|
| 34 | E | Y | Dry (1.1:1) | 10 | 800 | 53 | 0.7 |
| 35 | E | Y | Dry (1.1:1) | 10 | 850 | 64 | 0.8 |
| 36 | E | Y | Dry (1.1:1) | 10 | 900 | 73 | 0.9 |
| 37 | E | Y | Dry (1.1:1) | 10 | 950 | 80 | 0.9 |
| 38 | E | Y | Dry (1.1:1) | 10 | 1000 | 96 | 1.0 |

### Examples 39-40: Laboratory evaluation of Inconel 718 powder

Inconel 718 powder from the same batch as the monolith constructed as described in Example 1 was set inside a packed bed and subjected to cyclic reducing and oxidative environments. The powder contained an equal amount of Inconel 718 on a per weight basis as the monolith constructed in Figure 1. The powder exhibits characteristics that would be the same or similar as a spherical bead geometry.

Examples 39 and 40 show dry reforming of methane with GHSVs of 10,000 h⁻¹ and a gas composition of 43.1% CH₄, 46.9% CO₂, and 10% N₂. As shown in Table 6 below the Inconel 718 powder exhibited very little activity (10% conversion) through five cycles (Example 39). However, after the 250th cycle, the methane conversion increased to 84% conversion (Example 40). The cycling dry reforming experiments included an additional step wherein the reforming feed is introduced for 1 minute followed by a 7 second nitrogen purge and then a combustion feed of 5% O₂/N₂ feed is introduced for 1 minute followed by a 7 second nitrogen purge. This examples shows that different geometries of otherwise inert metals can be activated via oxido-reductive promotion.

**Table 6**

| Ex. | Mon. | Cycling | Reforming (H₂O+CO₂:CH₄ | GHSV (h⁻¹ × 10⁻³) | Temp. (°C) | CH₄ Conv. (%) | H₂/CO |
|---|---|---|---|---|---|---|---|
| 40 | Powde r | Y (5^{th}) | Dry (1.1:1) | 10 | 1000 | 10 | 0.8 |
| 41 | Powde r | Y (250^{th}) | Dry (1.1:1) | 10 | 1000 | 84 | 0.9 |

### Example 42: Comparison of activation of Inconel 718 3D printed monolith and Inconel 718 metal coupon

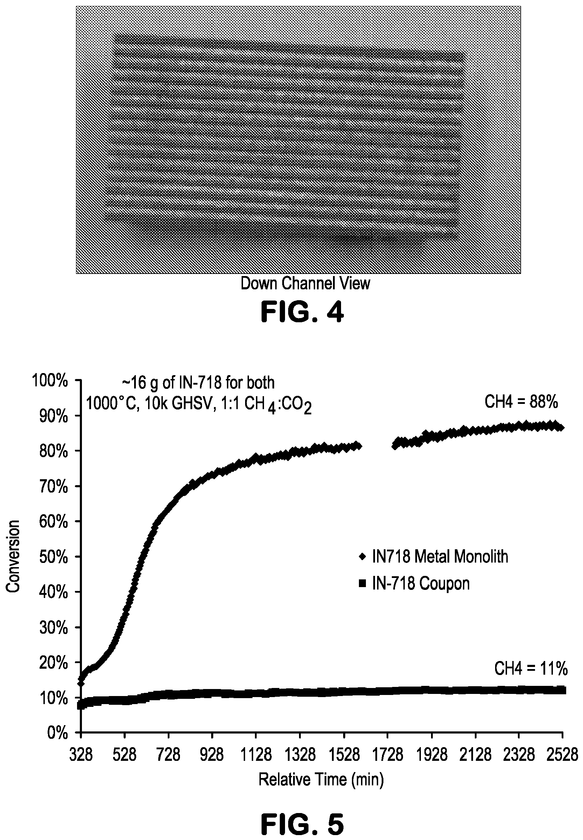

An Inconel 718 monolith constructed as described in Example 1 and an Inconel 718 metal coupon were both subjected to cyclic reducing and oxidative environments. The monolith and the coupon contained an equal amount of Inconel 718 on a per weight basis. Figure 5 shows graphically the activity increase in dry reforming (carbon dioxide) of methane with a GHSV of 10,000 h⁻¹ at 1000°C and a feed gas composition of gas composition of 43.1% CH₄, 46.9% CO₂, and 10% N₂.

As shown, the 3D printed monolith is susceptible to activation by the methods described above, while the metal coupon is not.

## Claims

1. A method of activating a metal monolith for reforming a hydrocarbon, wherein said metal monolith comprises a monolithic support constructed via additive manufacturing comprising a metal alloy comprising nickel, wherein the monolithic support comprises a plurality of cells with channels extending therefrom; and wherein the monolithic support has a melting point greater than 1200°C;
said method comprising, exposing the metal monolith to a cyclic oxidative and reducing environment for a sufficient number of cycles to activate the metal monolith.

2. The method of claim 1, wherein the plurality of cells with channels comprises channels with non-linear pathways through the monolith.

3. The method of any of the previous claims, wherein the metal monolith further comprises a catalyst coating.

4. The method of claim 3, wherein the catalyst is a zeolite, or wherein the catalyst comprises metal nanoparticles.

5. The method of any of the previous claims, wherein the monolithic support comprises a metal alloy and the metal alloy is one of an Inconel, Hastelloy, and Monel variant.

6. The method of any of the previous claims, wherein the monolithic support has a volumetric heat capacity greater than 3.5 J/cc/K.

7. The method of any one of claims 1 to 6, wherein the oxidative environment comprises at least one of oxygen, carbon dioxide, carbon monoxide, water, combustion byproducts, peroxide, ozone, permanganate, organic acids, halides, or combinations thereof.

8. The method of any one of claims 1 to 7, wherein the reducing environment comprises at least one of methane, ethane, propane, butane, higher C number paraffins, ethylene, propylene, butylene, higher C number olefins, acetylene, methylacetylene-propadiene (MAPD), hydrogen, carbon monoxide, hydrides, hydrogen sulfide, or combinations thereof.

9. The method of any of any one of claims 1 to 8, wherein the exposing the metal component to a cyclic oxidative and reducing environment includes 5 to 300 cycles; preferably 20 to 250 cycles.

10. The method of any one of claims 1 to 9, wherein the reducing environment comprises steam and hydrocarbons; or CO₂ and hydrocarbons.

11. The method of any one of claims 1 to 10, wherein the oxidizing environment comprises O₂; or O₂ and N₂.

12. The method of any one of claims 1 to 11, wherein the exposure of the metal monolith to said cyclic oxidative and reducing environment occurs at a temperature between 800 °C and 1400 °C.

13. A method for reforming a feed comprising,
- providing a metal monolith comprising a monolithic support constructed via additive manufacturing comprising a metal alloy comprising nickel, wherein the monolithic support comprises a plurality of cells with channels extending therefrom; and wherein the monolithic support has a melting point greater than 1200°C;
- activating said metal monolith by exposing the metal monolith to a cyclic oxidative and reducing environment for a sufficient number of cycles to activate the metal monolith;
- introducing a reforming feed to the metal monolith in the presence of heat; wherein the reforming feed comprises
- hydrocarbons; and
- steam, carbon dioxide, or a combination thereof; thereby producing CO and H₂; and
- introducing a combustion feed to the metal monolith comprising O₂ or a combination of O₂ and N₂.

14. The method of claim 13 wherein the reforming feed comprises methane.

## Patentansprüche

1. Verfahren zum Aktivieren eines Metallmonolithen zum Reformieren von Kohlenwasserstoff, bei dem der Metallmonolith einen monolithischen Träger umfasst, der mittels additiver Fertigung aufgebaut ist und eine Metalllegierung umfasst, die Nickel umfasst, wobei der monolithische Träger eine Vielzahl von Zellen mit sich davon erstreckenden Kanälen umfasst, und wobei der monolithische Träger einen Schmelzpunkt von mehr als 1200°C aufweist,
und das Verfahren umfasst, dass der Metallmonolith einer zyklisch oxidierenden und reduzierenden Umgebung für eine ausreichende Anzahl von Zyklen ausgesetzt wird, so dass der Metallmonolith aktiviert wird.

2. Verfahren nach Anspruch 1, bei dem die Vielzahl von Zellen mit Kanälen Kanäle mit nicht-linearen Pfaden durch den Monolithen hindurch umfasst.

3. Verfahren nach einem der vorhergehenden Ansprüche, bei dem der Metallmonolith des Weiteren Katalysatorbeschichtung umfasst.

4. Verfahren nach Anspruch 3, bei dem der Katalysator Zeolith ist, oder bei dem der Katalysator Metallnanopartikel umfasst.

5. Verfahren nach einem der vorhergehenden Ansprüche, bei dem der monolithische Träger eine Metalllegierung umfasst und die Metalllegierung eine von einer Inconel-, Hastelloy- und Monel-Variante ist.

6. Verfahren nach einem der vorhergehenden Ansprüche, bei dem der monolithische Träger eine volumetrische Wärmekapazität größer als 3,5 J/cm³/K aufweist.

7. Verfahren nach einem der Ansprüche 1 bis 6, bei dem die oxidierende Umgebung mindestens eines von Sauerstoff, Kohlendioxid, Kohlenmonoxid, Wasser, Verbrennungsnebenprodukten, Peroxid, Ozon, Permanganat, organischen Säuren, Halogeniden oder Kombinationen davon umfasst.

8. Verfahren nach einem der Ansprüche 1 bis 7, bei dem die reduzierende Umgebung mindestens eines von Methan, Ethan, Propan, Butan, Paraffinen mit höherer Kohlenstoffzahl, Ethylen, Propylen, Butylen, Olefinen mit höherer Kohlenstoffzahl, Acetylen, Methylacetylen-Propadien (MAPD), Wasserstoff, Kohlenmonoxid, Hydriden, Schwefelwasserstoff oder Kombinationen davon umfasst.

9. Verfahren nach einem der Ansprüche 1 bis 8, bei dem das Aussetzen der Metallkomponente einer zyklisch oxidierenden und reduzierenden Umgebung 5 bis 300 Zyklen, vorzugsweise 20 bis 250 Zyklen einschließt.

10. Verfahren nach einem der Ansprüche 1 bis 9, bei dem die reduzierende Umgebung Wasserdampf und Kohlenwasserstoffe umfasst, oder CO₂ und Kohlenwasserstoffe.

11. Verfahren nach einem der Ansprüche 1 bis 10, bei dem die oxidierende Umgebung O₂ oder O₂ und N₂ umfasst.

12. Verfahren nach einem der Ansprüche 1 bis 11, bei dem das Aussetzen des Metallmonolithen der zyklischen oxidierenden und reduzierenden Umgebung bei einer Temperatur zwischen 800°C und 1400°C stattfindet.

13. Verfahren zum Reformieren eines Einsatzmaterials, bei dem:
- ein Metallmonolith bereitgestellt wird, der einen monolithischen Träger umfasst, der mittels additiver Fertigung aufgebaut ist und eine Metalllegierung umfasst, die Nickel umfasst, wobei der monolithische Träger eine Vielzahl von Zellen mit sich davon erstreckenden Kanälen umfasst, und wobei der monolithische Träger einen Schmelzpunkt größer als 1200°C aufweist,
- der Metallmonolith aktiviert wird, indem er einer zyklisch oxidierenden und reduzierenden Umgebung für eine ausreichende Anzahl von Zyklen ausgesetzt wird, so dass der Metallmonolith aktiviert wird,
- ein Reformiereinsatzmaterial in Gegenwart von Wärme an den Metallmonolithen herangeführt wird, wobei das Reformiereinsatzmaterial folgendes umfasst:
- Kohlenwasserstoffe und
- Wasserdampf, Kohlendioxid oder eine Kombination davon, wodurch CO und H₂ produziert wird, und
- ein Verbrennungseinsatzmaterial an den Metallmonolithen herangeführt wird, das O₂ oder eine Kombination von O₂ und N₂ umfasst.

14. Verfahren nach Anspruch 13, bei dem das Reformiereinsatzmaterial Methan umfasst.

## Revendications

1. Procédé d'activation d'un monolithe métallique pour le reformage d'un hydrocarbure, ledit monolithe métallique comprenant un support monolithique construit via une fabrication additive comprenant un alliage métallique comprenant du nickel, le support monolithique comprenant une pluralité de cellules dotées de canaux s'étendant à partir de celles-ci ; et le support monolithique possédant un point de fusion supérieur à 1 200 °C ;
ledit procédé comprenant, l'exposition du monolithe métallique à un environnement cyclique oxydant et réducteur pendant un nombre suffisant de cycles pour activer le monolithe métallique.

2. Procédé selon la revendication 1, la pluralité de cellules dotées de canaux comprenant des canaux dotés de passages non linéaires à travers le monolithe.

3. Procédé selon l'une quelconque des revendications précédentes, le monolithe métallique comprenant en outre un revêtement de catalyseur.

4. Procédé selon la revendication 3, le catalyseur étant une zéolithe, ou le catalyseur comprenant des nanoparticules métalliques.

5. Procédé selon l'une quelconque des revendications précédentes, le support monolithique comprenant un alliage métallique et l'alliage métallique étant l'un parmi une variante Inconel, Hastelloy, et Monel.

6. Procédé selon l'une quelconque des revendications précédentes, le support monolithique possédant une capacité calorifique volumétrique supérieure à 3,5 J/cm³/K.

7. Procédé selon l'une quelconque des revendications 1 à 6, l'environnement oxydant comprenant au moins l'un parmi l'oxygène, le dioxyde de carbone, le monoxyde de carbone, l'eau, des sous-produits de combustion, un peroxyde, l'ozone, un permanganate, des acides organiques, des halogénures, et des combinaisons correspondantes.

8. Procédé selon l'une quelconque des revendications 1 à 7, l'environnement réducteur comprenant au moins l'un parmi le méthane, l'éthane, le propane, le butane, des paraffines à nombre de C plus élevé, l'éthylène, le propylène, le butylène, des oléfines à nombre de C plus élevé, l'acétylène, le méthylacétylène-propadiène (MAPD), l'hydrogène, le monoxyde de carbone, des hydrures, le sulfure d'hydrogène, et des combinaisons correspondantes.

9. Procédé selon l'une quelconque des revendications 1 à 8, l'exposition du composant métallique à un environnement cyclique oxydant et réducteur comportant 5 à 300 cycles ; préférablement 20 à 250 cycles.

10. Procédé selon l'une quelconque des revendications 1 à 9, l'environnement réducteur comprenant de la vapeur et des hydrocarbures ; ou du CO₂ et des hydrocarbures.

11. Procédé selon l'une quelconque des revendications 1 à 10, l'environnement oxydant comprenant de l'O₂ ; ou de l'O₂ et du N₂.

12. Procédé selon l'une quelconque des revendications 1 à 11, l'exposition du monolithe métallique audit environnement cyclique oxydant et réducteur ayant lieu à une température comprise entre 800 °C et 1 400 °C.

13. Procédé pour le reformage d'une charge d'alimentation comprenant,
- la mise à disposition d'un monolithe métallique comprenant un support monolithique construit via une fabrication additive comprenant un alliage métallique comprenant du nickel, le support monolithique comprenant une pluralité de cellules dotées de canaux s'étendant à partir de celles-ci ; et le support monolithique possédant un point de fusion supérieur à 1 200 °C ;
- l'activation dudit monolithe métallique par l'exposition du monolithe métallique à un environnement cyclique oxydant et réducteur pendant un nombre suffisant de cycles pour activer le monolithe métallique ;
- l'introduction d'une charge d'alimentation de reformage dans le monolithe métallique en la présence de chaleur ;
la charge d'alimentation de reformage comprenant
o des hydrocarbures ; et
o de la vapeur, du dioxyde de carbone, ou une combinaison correspondante ; produisant ainsi du CO et du H₂ ; et
o l'introduction d'une charge d'alimentation de combustion dans le monolithe métallique comprenant de l'O₂ ou une combinaison de O₂ et de N₂.

14. Procédé selon la revendication 13, la charge d'alimentation de reformage comprenant du méthane.
